# EUROPÄISCHE PATENTSCHRIFT

(11) **EP 0 691 499 B1**
(45) Veröffentlichungstag und Bekanntmachung des Hinweises auf die Patenterteilung: **04.11.1998**
(21) Anmeldenummer: 95108952.3
(22) Anmeldetag: 10.06.1995
(51) Int. Cl.: F16L 37/00

(54) **Anschlussvorrichtung für Druckleitungen**
Connection device for pressure pipes
Dispositif de fixation pour conduites sous pression

(30) Priorität: 06.07.1994 DE 4423805
(43) Veröffentlichungstag der Anmeldung: 10.01.1996
(73) Patentinhaber: ARMATURENFABRIK HERMANN VOSS GMBH & CO., D-51688 Wipperfürth (DE)
(72) Erfinder: Brandt, Josef, D-51688 Wipperfürth (DE)
(74) Vertreter: Patentanwälte Dr. Solf & Zapf

(56) Entgegenhaltungen:
- EP-A- 0 005 865
- EP-A- 0 273 016
- EP-A- 0 292 464
- EP-A- 0 427 660
- EP-A- 0 482 204
- WO-A-86/01252
- NL-C- 34
- US-A- 5 058 930
- US-A- 5 109 929

## Beschreibung

Die vorliegende Erfindung betrifft eine Anschlußvorrichtung für Druckleitungen, mit einem eine Aufnahmeöffnung zum Einstecken eines Steckerteils aufweisenden Gehäuseteil, welches zweiteilig aus einem Basisteil und einem lösbar mit einem Außengewindeabschnitt in ein Innengewinde des Basisteils eingeschraubten Einschraubteil besteht.

Eine solche Anschlußvorrichtung ist beispielsweise aus der EP-B1-0 005 865 bekannt. Die Zweiteilung des Gehäuseteils dient dazu, eine Lösbarkeit des eingesteckten, über einen in einer inneren Ringkammer gelagerten Haltering arretierten Steckerteils zu gewährleisten, indem die den Haltering aufnehmende Ringkammer zwischen dem Einschraubteil und einer Bohrungsstufenfläche des Basisteils gebildet ist. Hierdurch kann nach Lösen bzw. Herausschrauben des Einschraubteils das Steckerteil zusammen mit dem in eine äußere Steckerringnut eingreifenden Haltering entnommen werden. Zum Montieren bzw. Lösen weist das Einschraubteil einen sich an den Außengewindeabschnitt anschließenden flanschartigen, insbesondere als Außensechskant ausgebildeten Betätigungsabschnitt auf. Zur Abdichtung der Anschlußvorrichtung nach außen ist einerseits auf dem Steckerteil mindestens ein äußerer Dichtring angeordnet, der im eingesteckten Zustand den Spalt zur Aufnahmeöffnung abdichtet. Andererseits muß aufgrund des zweiteilig ausgebildeten Gehäuseteils auch zwischen dem Basisteil und dem Einschraubteil ein Dichtring angeordnet sein.

Nun ist es heute in zunehmendem Maße erwünscht, das Basisteil und das Einschraubteil aus verschiedenen Werkstoffen herzustellen, und zwar insbesondere das Basisteil aus Kunststoff und das Einschraubteil aus Metall. Es hat sich aber gezeigt, daß insbesondere bei einer solchen Werkstoffkombination (Kunststoff-Metall-Kombination) im praktischen Einsatz, und zwar vor allem bei Kfz-Bremssystemen, wie Druckluft-Bremsanlagen in LKW, häufig Undichtigkeiten zwischen dem Basisteil und dem Einschraubteil auftreten, und zwar vor allem deshalb, weil sich das Einschraubteil ungewollt, z.B. vibrationsbedingt, zumindest geringfügig von dem Basisteil löst.

Die WO-A-86 01252 beschreibt eine Schraubverbindung, die aus mehreren (zwei) Gewindeabschnitten bestehen soll, zwischen denen ein axialer Versatz (thread offset/thread shifting) derart vorgesehen sein soll, daß zwischen den Gewindeflanken ein verringertes Spiel vorhanden ist.

Der vorliegenden Erfindung liegt die Aufgabe zugrunde, eine Anschlußvorrichtung der gattungsgemäßen Art so zu verbessern, daß unter nahezu allen in der Praxis denkbaren Einsatzbedingungen die Dichtigkeit dauerhaft gewährleistet ist, und zwar insbesondere auch bei Verwendung einer Kunststoff-Metall-Kombination des Basisteils und des Einschraubteils.

Eine erste erfindungsgemäße Lösung besteht bei einer Ausführung, bei der das - insbesondere aus Metall bestehende - Einschraubteil einen sich an den Außengewindeabschnitt anschließenden, flanschartigen, insbesondere als Außensechskant ausgebildeten Betätigungsabschnitt aufweist, darin, daß das - vorzugsweise aus Kunststoff bestehende - Basisteil als Verbindungsmittel zur Erzeugung eines erhöhten Kraft- und/oder Formschlusses und dadurch eines erhöhten Lösedrehmomentes einen umlaufenden Ringkragen aufweist, der im eingeschraubten Zustand des Einschraubteils den Betätigungsabschnitt kraft- und/oder formschlüssig umschließt. Dabei kommt es vorzugsweise aufgrund des Kunststoffmaterials des Basisteils zu einer plastischen oder elastischen Verformung im Bereich des Ringkragens derart, daß sich die Ecken des Sechskant-Betätigungsabschnittes formschlüssig in den Ringkragen eindrücken. Ausgehend von diesem Zustand ist aber dennoch ein Lösen möglich, wobei dann wieder eine entsprechende Verformung des Ringkragens auftritt.

Gemäß einer zweiten erfindungsgemäßen Lösung können entsprechende Verbindungsmittel im Bereich der ineinandergreifenden Gewinde des Basisteils und des Einschraubteils gebildet sein, indem sich erfindungsgemäß die beiden Gewinde zumindest bereichsweise bezüglich mindestens einer ihrer maßgeblichen Gewindegrößen voneinander unterscheiden. Hierdurch wird erfindungsgemäß eine erhöhte Gewindereibung und damit ebenfalls ein höheres Lösedrehmoment erreicht. Bei der bevorzugten Ausbildung des Einschraubteils aus Metall und des Basisteils aus Kunststoff ist dann zweckmäßigerweise das Innengewinde des Basisteils gegenüber dem Außengewinde des Einschraubteils derart "modifiziert", daß es - vorzugsweise mit Ausnahme des Bereichs etwa der ersten zwei Gewindegänge - einen reduzierten Außendurchmesser und/ oder einen vergrößerten Flankenwinkel und/oder einen reduzierten Flankendurchmesser aufweist. Vorzugsweise sind alle drei genannten Größen bzw. Parameter wie angegeben modifiziert, während vorzugsweise der Kerndurchmesser und die Steigung unverändert bleiben, d.h. weiterhin dem Außengewinde des Einschraubteils entsprechen (beispielsweise metrisches Gewinde, z.B. M 16x1,5).

Beide erfindungsgemäßen Lösungen können wahlweise alternativ einzeln oder aber in Kombination miteinander angewandt werden.

Durch das erfindungsgemäß erzeugte, zum Lösen des Einschraubteils erforderliche, erhöhte Lösedrehmoment werden vorteilhafterweise ungewollte Lösevorgänge wirksam vermieden, so daß auch die Abdichtung zwischen den Teilen gewährleistet bleibt.

In einer vorteilhaften Weiterbildung der Erfindung ist die Abdichtung zwischen dem Basisteil und dem Einschraubteil zusätzlich auch dadurch verbessert, daß innerhalb der Dichtringkammer mindestens eine den Kammer-Querschnitt über den gesamten Umfang hinweg reduzierende Ringerhebung derart gebildet ist, daß der Dichtring zonal mit einer erhöhten Verpressung beaufschlagt wird. Alternativ oder zusätzlich hierzu kann auch der Dichtring selbst eine entsprechende Ringerhebung derart aufweisen, daß er durch Anlage an der Wandung der Dichtringkammer über die Ringerhebung zonal mit einer erhöhten Verpressung beaufschlagt wird. Diese vorteilhafte Weiterbildung der Erfindung basiert auf der Erkenntnis, daß die im Stand der Technik vor allem bei einer Kombination von Metall- und Kunststoffteilen zu beobachtenden Undichtigkeiten oftmals bei starken Temperaturschwankungen dadurch auftreten, daß es aufgrund unterschiedlicher Temperaturausdehnungskoeffizienten der Materialien zu unterschiedlichen Wärmeausdehnungen kommt, die dann von der Elastizität des Dichtringes nicht mehr ausgeglichen werden können. Durch die erfindungsgemäße zonal erhöhte und insbesondere in radialer Richtung wirkende Verpresssung des Dichtringes wird nun aber praktisch eine "Elastizitätsreserve" geschaffen, die auch bei Temperaturwechselbeanspruchungen mindestens in einem Bereich von -40°C bis +100°C eine Dichtheit gewährleistet. Hierdurch ist es ohne Probleme möglich geworden, eine solche Anschlußvorrichtung insbesondere auch mit einer Kunststoff-Metall-Kombination von Basis- und Einschraubteil auch in solchen Bereichen einzusetzen, wo es zu starken Temperaturwechselbeanspruchungen kommt. Dies ist beispielsweise in Kraftfahrzeugen der Fall, so daß sich die erfindungsgemäße Anschlußvorrichtung sehr gut speziell für diese Anwendung eignet.

Weitere vorteilhafte Ausgestaltungsmerkmale der Erfindung sind in den Unteransprüchen sowie der folgenden Beschreibung eines bevorzugten Ausführungsbeispiels enthalten.

Anhand der Zeichnung soll nun die Erfindung beispielhaft näher erläutert werden. Dabei zeigen:
- Fig. 1: einen Axialschnitt durch ein Gehäuseteil einer erfindungsgemäßen Anschlußvorrichtung ohne Darstellung des Steckerteils,
- Fig. 2: eine Draufsicht auf das Gehäuseteil in Pfeilrichtung II gemäß Fig. 1,
- Fig. 3: einen Axialschnitt nur des Basisteils vor Montage des Einschraubteils,
- Fig. 4: eine Draufsicht auf das Basisteil in Pfeilrichtung IV gemäß Fig. 3,
- Fig. 5: eine stark vergrößerte Abbildung des Bereichs V in Fig. 1,
- Fig. 6: einen vergrößerten Ausschnitt des Axialschnitts des Basisteils und
- Fig. 7: eine Ausschnitt-Vergrößerung aus Fig. 6 im Bereich des Innengewindes des Basisteils.

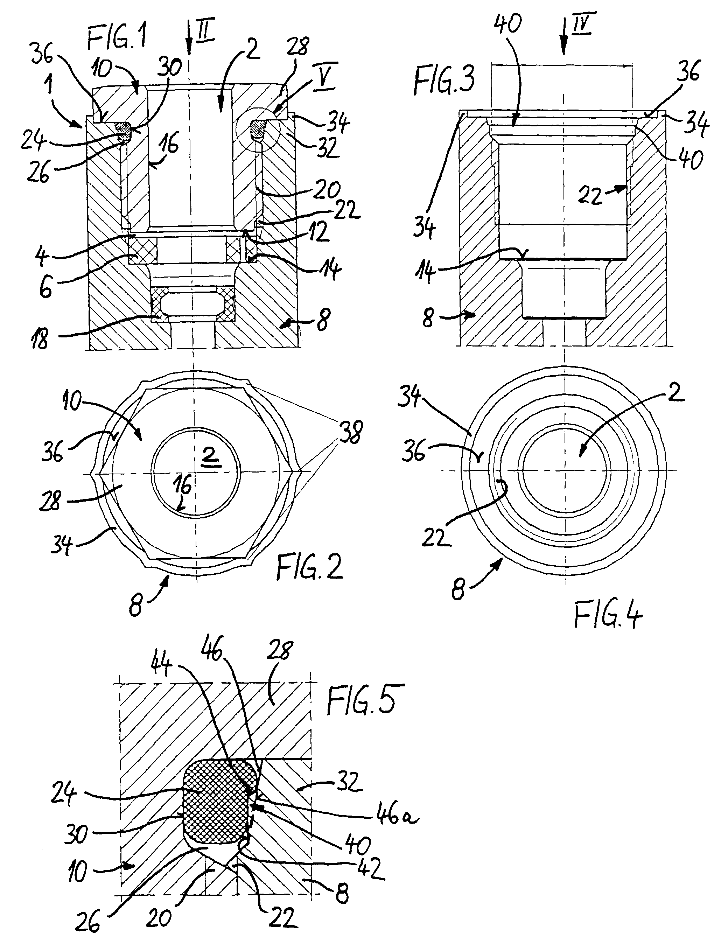

In Fig. 1 ist ein Gehäuseteil 1 einer Anschlußvorrichtung dargestellt. Das Gehäuseteil 1 weist eine Aufnahmeöffnung 2 zum umfänglich abgedichteten Einstecken eines nicht dargestellten, beispielsweise mit einer Druckleitung verbundenen Steckerteils auf. Innerhalb der Aufnahmeöffnung 2 ist in einer inneren Ringkammer 4 ein radialelastisch verformbarer Haltering 6 gelagert, der zum Arretieren des in die Aufnahmeöffnung 2 eingesteckten Steckerteils dient, indem er bereichsweise in eine Außenringnut des Steckerteils einrastet. Um nachfolgend eine Lösbarkeit des Steckerteils zu gewährleisten, ist das Gehäuseteil 1 zweiteilig ausgebildet, und zwar besteht es aus einem Basisteil 8 und einem lösbar in das Basisteil 8 eingesetzten Einschraubteil 10, wobei die den Haltering 6 aufnehmende Ringkammer 4 zwischen einer Stirnfläche 12 des Einschraubteils 10 und einer Bohrungsstufenfläche 14 des Basisteils 8 gebildet ist. Hierdurch kann das Steckerteil zusammen mit dem in seiner Außenringnut sitzenden Haltering 6 entnommen werden, nachdem das Einschraubteil 10 vom Basisteil 8 gelöst wurde.

Das Basisteil 8 kann Teil eines beliebigen Anschlußgehäuses, beispielsweise auch eines Ventilgehäuses, sein. Das Einschraubteil 10 weist eine axiale Durchgangsbohrung 16 auf, die einen Teil der Aufnahmeöffnung 2 bildet. Im der Öffnungsseite, von der her der Stecker einsteckbar ist, abgekehrten Bereich der Aufnahmeöffnung 2 ("unterhalb" des Halteringes 6) ist ein elastisches Ringelement 18 angeordnet, welches eine zusätzliche Abdichtung des Steckerteils sowie vorteilhafterweise auch eine axiale, in Löserichtung wirkende Vorspannkraft auf das Steckerteil bewirkt.

Wie dargestellt, weist das Einsschraubteil 10 einen Außengewindeabschnitt 20 auf, mit dem es in ein Innengewinde 22 des Basisteils 8 einschraubbar ist. Zur Abdichtung zwischen dem Basisteil 8 und dem Einschraubteil 10 ist ein elastischer Dichtring 24 (siehe auch Fig. 5) in einer zwischen den beiden Teilen gebildeten Dichtringkammer 26 angeordnet. Hierbei ist die Dichtringkammer 26 vorzugsweise einerseits von einer zwischen dem Außengewindeabschnitt 20 und einem insbesondere als Außensechskant ausgebildeten Betätigungsabschnitt 28 angeordneten Ringnut 30 des Einsatzteils 10 sowie andererseits von einem sich ausgehend von dem Innengewinde 22 in Öffnungsrichtung erstreckenden Ringabschnitt 32 des Basisteils 8 begrenzt.

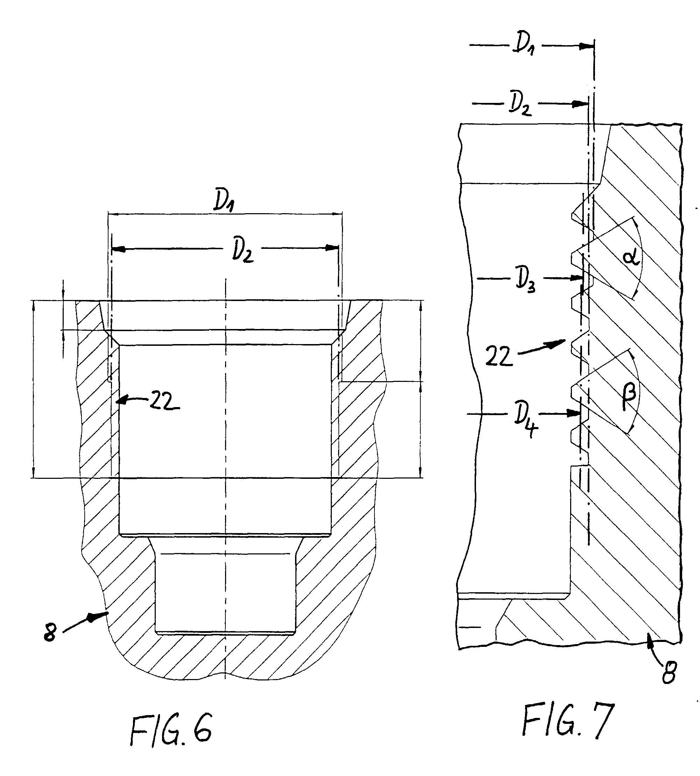

Die vorliegende Erfindung besteht nun darin, daß zwischen dem Basisteil 8 und dem Einschraubteil Verbindungsmittel zur Erzeugung eines erhöhten Kraft- und/oder Formschlusses und dadurch eines erhöhten Lösedrehmomentes gebildet sind. Für diese Verbindungsmittel gibt es nun mehrere verschiedene Möglichkeiten, die im Folgenden einerseits anhand der Fig. 1 bis 4 und andererseits anhand der Fig. 6 und 7 näher erläutert werden sollen. Dabei ist bei beiden konkret beschriebenen Ausführungsformen davon auszugehen, daß das Basisteil 8 aus einem Kunststoffmaterial besteht, während das Einschraubteil grundsätzlich aus einem beliebigen Material hergestellt sein kann, vorzugsweise jedoch aus Metall.

Gemäß Fig. 1 bis 4 weist das Basisteil 8 als Verbindungsmittel einen umlaufenden Ringkragen 34 auf, der im eingeschraubten Zustand des Einschraubteils 10 dessen Betätigungsabschnitt 28 zumindest bereichsweise kraft- und/oder formschlüssig umschließt. Dieser Ringkragen 34 geht von einer ebenen Auflagefläche 36 des Basisteils 8 aus, wobei auf dieser Auflagefläche 36 (siehe auch Fig. 3) der Betätigungsabschnitt 28 des Einschraubteils 10 zur Auflage kommt. Im eingeschraubten Zustand - siehe Fig. 1 - erstreckt sich der Ringkragen 34 über einen Teil der axialen Länge des Betätigungsabschnittes 28. Der (Innen-) Durchmesser des Ringkragens 34 ist hierbei erfindungsgemäß in Anpassung an die Größe des Außensechskantes des Betätigungsabschnittes 28 derart gewählt, daß sich die Ecken des Sechskantes unter radialer Verformung (Verdrängung) des Ringkragens 34 formschlüssig in den Ringkragen 34 eindrücken. Dies ist in Fig. 2 gut zu erkennen; durch die Ecken des Sechskant-Betätigungsabschnittes 28 werden im Bereich des Ringkragens 34 jeweils Ausbuchtungen 38 gebildet. Dies führt praktisch zu einer Kraft-Formschlußverbindung zwischen dem Einschraubteil 10 und dem Basisteil 8.

Alternativ oder aber zusätzlich hierzu können die Verbindungsmittel gemäß Fig. 6 und 7 auch im Bereich der Gewinde, d.h. des Außengewindeabschnittes 20 des Einschraubteils 10 und/oder des Innengewindes 22 des Basisteils 8, gebildet sein, indem sich die beiden Gewinde 20, 22 mindestens bereichsweise, d.h. in zumindest einem Teil ihrer Gewindegänge, bezüglich wenigstens einer ihrer maßgeblichen Gewindegrößen bzw. -parameter voneinander unterscheiden. Dies bedeutet, daß sich wenigstens eines der beiden Gewinde vom jeweils anderen Gewinde zumindest bereichsweise bezüglich des Außendurchmessers und/oder des Flankenwinkels und/oder des Flankendurchmessers und/oder des Kerndurchmessers und/ oder der Steigung unterscheidet. In der dargestellten, bevorzugten Ausführung - siehe Fig. 6 und 7 - weist das Innengewinde 22 des bevorzugt aus Kunststoff bestehenden Basisteils 8 - mit Ausnahme des Bereichs etwa der ersten zwei Gewindegänge - gegenüber dem Außengewinde 20 des bevorzugt aus Metall bestehenden Einschraubteils 10 einen reduzierten Außendurchmesser D₂, einen vergrößerten Flankenwinkel β sowie einen reduzierten Flankendurchmesser D₄ auf. Die ersten Gewindegänge entsprechen hierbei dem Außengewinde 20 des Einschraubteils 10, d.h. in diesem Bereich weist das Außengewinde 22 den "normalen" Außendurchmesser D₁, den "normalen" Flankenwinkel α und auch den "normalen" Flankendurchmesser D₃ auf. In dem modifizierten Gewindebereich bleiben allerdings vorzugsweise der Kerndurchmesser und die Steigung unverändert. Bei dem Außendurchmesser 20 des Einschraubteils 10 handelt es sich vorzugsweise um ein übliches metrisches Gewinde, beispielsweise M 16x1,5, wobei dann der modifizierte Außendurchmesser D₂ etwa 15,75 mm und der modifizierte Flankenwinkel β etwa 65° (anstatt α = 60°) betragen. Der modifizierte Flankendurchmesser D₄ ergibt sich dann entsprechend durch die Mitte der jeweiligen Flankenhöhe. Durch die erfindungsgemäße Modifikation der Gewindeverbindung wird eine erhöhte Gewindereibung erzeugt, wobei aber dennoch das Einschraubteil 10 mit einem höheren Drehmoment verdreht werden kann, weil es durch die Verwendung von Kunststoffmaterial für das Basisteil 8 im Gewindebereich zu entsprechenden, insbesondere elastischen Verformungen kommen kann.

Anhand der Fig. 1 und 5 soll nun noch eine vorteilhafte Weiterbildung der Erfindung erläutert werden. Hierbei handelt es sich darum, daß der Dichtring 24 zonal und vor allem in etwa radialer Richtung mit einer erhöhten Verpressung beaufschlagt wird. Gemäß Fig. 5 kann dies einerseits dadurch erreicht werden, daß innerhalb der Dichtringkammer 26 (mindestens) eine den Kammer-Querschnitt (entspricht einem Axial- bzw. Radialschnitt bezogen auf die Steckachse) über den gesamten Umfang hinweg reduzierende Ringerhebung 40 derart gebildet ist, daß der Dichtring 24 zonal,d.h. im Bereich der Ringerhebung 40, mit einer erhöhten Verpressung beaufschlagt wird. Diese sich über den gesamten Umfang der Dichtringkammer 26 erstreckende Ringerhebung 40 bildet somit eine Dichtkante bzw. einen Dichtwulst. Durch diese erfindungsgemäß erreichte, erhöhte Verpressung des Dichtringes 24 wird eine "Elastizitätsreserve" geschaffen, die auch bei temperaturänderungsbedingten Erweiterungen der Dichtringkammer 26 stets eine dichtende, beidseitige Anlage des Dichtringes 24 gewährleistet, indem der Dichtring 24 diesen Erweiterungen der Dichtringkammer 26 ausgleichend folgt. Darüber hinaus werden durch die Erfindung auch Formungenauigkeiten bei der Herstellung des Basisteils 8 und/oder des Einsatzteils 10 ausgeglichen. Dies ist insbesondere dann von wesentlicher Bedeutung, wenn zumindest eines der beiden Teile aus Kunststoff im Spritzgußverfahren hergestellt wird, weil es hierbei zu Formungenauigkeiten kommen kann.

Durch diese vorteilhafte Maßnahme können das Basisteil 8 und das Einsatzteil 10 vorteilhafterweise aus unterschiedlichen Materialien, d.h. insbesondere aus einer Kunststoff-Metall-Kombination, bestehen, ohne daß Probleme bezüglich der Abdichtung oder bezüglich ungewollter Lösevorgänge zu befürchten wären. Wie oben bereits ausgeführt, bestehen das Basisteil 8 bevorzugt aus Kunststoff und das Einsatzteil 10 dann insbesondere aus Metall.

Im Falle der dargestellten, bevorzugten Ausführungsform - siehe Fig. 5 - ist die Ringerhebung 40 im Bereich des Ringabschnittes 32 des Basisteils 8 angeordnet. Alternativ oder aber zusätzlich kann auch im Bereich der Ringnut 30 des Einsatzteils 10 eine entsprechende Ringerhebung vorgesehen sein. Wie dargestellt, weist zur Bildung der Ringerhebung 40 das Basisteil 8 ausgehend von dem Innengewinde 22 eine etwa zylindrische Innenfläche 42 auf, an die sich in Öffnungsrichtung eine - praktisch als Stufe - die Ringkammer 26 radial nach außen erweiternde, vorzugsweise konische Ringfläche 44 anschließt, die ihrerseits in eine vorzugsweise in Öffnungsrichtung konisch erweiterte Innenfläche 46 übergeht. Somit ist die Ringerhebung 40 von der etwa zylindrischen Innenfläche 42 und der vorzugsweise leicht konischen Ringfläche 44 gebildet. "Normalerweise", d.h. bei aus dem Stand der Technik bekannten, gattungsgemäßen Anschlußvorrichtungen, ist als äußere Begrenzung der Dichtringkammer 26 eine durchgehende, d.h. von dem Innengewinde 22 ausgehende, erweiterte Konusfläche des Ringabschnittes 32 des Basisteils 8 vorgesehen. Durch die erfindungsgemäße Ringerhebung 40 bleibt von dieser bisher üblichen Konusfläche, die in Fig. 5 gestrichelt angedeutet und mit 46a bezeichnet ist, nur der Bereich der konischen Innenfläche 46 übrig.

Der Dichtring 24 kann hierdurch vorzugsweise als üblicher O-Ring ausgebildet sein, was besonders wirtschaftlich ist.

In einer nicht dargestellten Alternativ-Ausbildung kann auch vorgesehen sein, daß der Dichtring 24 selbst mindestens eine entsprechende, umlaufende Ringerhebung derart aufweist, daß er durch Anlage an der Wandung der Dichtringkammer 26 über seine Ringerhebung zonal mit einer erhöhten Verpressung beaufschlagt wird.

## Patentansprüche

1. Anschlußvorrichtung für Druckleitungen, mit einem eine Aufnahmeöffnung (2) zum Einstecken eines Steckerteils aufweisenden Gehäuseteil (1), welches zweiteilig aus einem Basisteil (8) und einem lösbar mit einem Außengewindeabschnitt (20) in ein Innengewinde (22) des Basisteils (8) eingeschraubten Einschraubteil (10) besteht, wobei das Einschraubteil (10) einen sich an den Außengewindeabschnitt (20) anschließenden, flanschartigen, insbesondere als Außensechskant ausgebildeten Betätigungsabschnitt (28) aufweist,
**dadurch gekennzeichnet**, daß zwischen dem Basisteil (8) und dem Einschraubteil (10) zur Erzeugung eines erhöhten Kraft- und/oder Formschlusses und dadurch eines erhöhten Lösedrehmomentes Verbindungsmittel gebildet sind, indem das Basisteil (8) als Verbindungsmittel einen umlaufenden Ringkragen (34) aufweist, der im eingeschraubten Zustand des Einschraubteils (10) den Betätigungsabschnitt (28) kraft- und/oder formschlüssig umschließt.

2. Anschlußvorrichtung nach Anspruch 1,
**dadurch gekennzeichnet**, daß im Bereich der Gewinde (20, 22) des Basisteils (8) und Einschraubteils (10) zusätzliche Verbindungsmittel gebildet sind, indem sich die beiden Gewinde (20, 22) zumindest bereichsweise bezüglich zumindest einer ihrer maßgeblichen Gewindegrößen voneinander unterscheiden.

3. Anschlußvorrichtung für Druckleitungen, mit einem eine Aufnahmeöffnung (2) zum Einstecken eines Steckerteils aufweisenden Gehäuseteil (1), welches zweiteilig aus einem Basisteil (8) und einem lösbar mit einem Außengewindeabschnitt (20) in ein Innengewinde (22) des Basisteils (8) eingeschraubten Einschraubteil (10) besteht,
**dadurch gekennzeichnet**, daß im Bereich der Gewinde (20,22) zwischen dem Basisteil (8) und dem Einschraubteil (10) Verbindungsmittel zur Erzeugung eines erhöhten Kraft- und/oder Formschlusses und dadurch eines erhöhten Lösedrehmomentes gebildet sind, indem sich die beiden Gewinde (20, 22) zumindest bereichsweise bezüglich zumindest einer ihrer maßgeblichen Gewindegrößen voneinander unterscheiden.

4. Anschlußvorrichtung nach Anspruch 3,
**dadurch gekennzeichnet**, daß das Einschraubteil (10) einen sich an den Außengewindeabschnitt (20) anschließenden, flanschartigen, insbesondere als Außensechskant ausgebildeten Betätigungsabschnitt (28) aufweist, wobei das Basisteil (8) als zusätzliches Verbindungsmittel einen umlaufenden Ringkragen (34) aufweist, der im eingeschraubten Zustand des Einschraubteils (10) den Betätigungsabschnitt (28) kraft- und/oder formschlüssig umschließt.

5. Anschlußvorrichtung nach einem der Ansprüche 1 bis 4, **dadurch gekennzeichnet**, daß das Basisteil (8) aus Kunststoff und das Einschraubteil (10) vorzugsweise aus Metall bestehen.

6. Anschlußvorrichtung nach einem der Ansprüche 1 bis 5, **dadurch gekennzeichnet**, daß der Durchmesser des Ringkragens (34) in Anpassung an die Größe des Außensechskantes des Betätigungsabschnittes (28) derart gewählt ist, daß sich die Ecken des Sechskantes formschlüssig in den Ringkragen (34) eindrücken.

7. Anschlußvorrichtung nach einem der Ansprüche 2 bis 6, **dadurch gekennzeichnet**, daß sich die beiden Gewinde (20, 22) bereichsweise bezüglich ihres Außendurchmessers (D₁, D₂) und/oder ihres Flankenwinkels (α, β) und/oder ihres Flankendurchmessers (D₃, D₄) und/oder ihres Kerndurchmessers und/oder ihrer Steigung voneinander unterscheiden.

8. Anschlußvorrichtung nach einem der Ansprüche 2 bis 7, **dadurch gekennzeichnet**, daß das Innengewinde (22) des Basisteils (8) - vorzugsweise mit Ausnahme des Bereichs etwa der ersten zwei bis drei Gewindegänge - gegenüber dem Außengewinde (20) des Einschraubteils (10) einen reduzierten Außendurchmesser (D₂) und/oder einen vergrößerten Flankenwinkel (β) und/oder einen reduzierten Flankendurchmesser (D₄) aufweist.

9. Anschlußvorrichtung nach einem der Ansprüche 1 bis 8, **dadurch gekennzeichnet**, daß in einer zwischen dem Basisteil (8) und dem Einschraubteil (10) gebildeten Dichtringkammer (26) ein elastischer Dichtring (24) zur Abdichtung des Einschraubteils (10) gegen das Basisteil (8) angeordnet ist.

10. Anschlußvorrichtung nach Anspruch 9,
**dadurch gekennzeichnet**, daß innerhalb der Dichtringkammer (26) mindestens eine den Kammer-Querschnitt über den gesamten Umfang hinweg reduzierende Ringerhebung (40) derart gebildet ist, daß der Dichtring zonal mit einer erhöhten Verpressung beaufschlagt wird.

11. Anschlußvorrichtung nach Anspruch 9 oder 10,
**dadurch gekennzeichnet**, daß die Dichtringkammer (26) einerseits von einer zwischen dem Außengewindeabschnitt (20) und dem insbesondere als Außensechskant ausgebildeten Betätigungsabschnitt (28) angeordneten Ringnut (30) des Einschraubteils (10) sowie andererseits von einem sich ausgehend von dem Innengewinde (22) in Öffnungsrichtung erstreckenden Ringabschnitt (32) des Basisteils (8) begrenzt wird, wobei die Ringerhebung (40) vorzugsweise im Bereich des Ringabschnittes (32) des Basisteils (8) angeordnet ist.

12. Anschlußvorrichtung nach Anspruch 11,
**dadurch gekennzeichnet**, daß das Basisteil (8) zur Bildung der Ringerhebung (40) ausgehend von dem Innengewinde (22) eine etwa zylindrische Innenfläche (42) aufweist, an die sich in Öffnungsrichtung eine die Ringkammer (26) radial nach außen erweiternde Ringfläche (44) anschließt, die in eine vorzugsweise in Öffnungsrichtung konisch erweiterte Innenfläche (46) übergeht.

13. Anschlußvorrichtung nach einem der Ansprüche 9 bis 12, **dadurch gekennzeichnet**, daß der Dichtring (24) als O-Ring ausgebildet ist.

14. Anschlußvorrichtung nach einem der Ansprüche 9 bis 12, **dadurch gekennzeichnet**, daß der Dichtring (24) mindestens eine umlaufende Ringerhebung derart aufweist, daß er durch Anlage an der Wandung der Dichtringkammer (26) über die Ringerhebung zonal mit einer erhöhten Verpressung beaufschlagt wird.

15. Anschlußvorrichtung nach einem der Ansprüche 1 bis 14, **dadurch gekennzeichnet**, daß zwischen einer auf der in das Basisteil (8) eingesetzten Seite gebildeten Stirnfläche (12) des Einschraubteils (10) und einer Bohrungsstufenfläche (14) des Basisteils (8) eine Ringkammer (4) für einen radialelastisch verformbaren, zum Arretieren des in die Aufnahmeöffnung (2) eingesteckten Steckerteils vorgesehenen Haltering (6) gebildet ist.

## Claims

1. Connection device for pressure lines, with a housing part (1) which has a receiving opening (2) for the insertion of a plug part and is of two parts comprising a base part (8) and a screw-in part (10), which is releasably screwed in by an externally threaded portion (20) into an internal thread (22) of the base part (8), the screw-in part (10) having a flange-like actuating portion (28), which adjoins the externally threaded portion (20) and is designed in particular as a hexagonal stub, characterized in that, to produce an increased frictionally locking and/or positively locking engagement and, as a result, an increased releasing torque, connecting means are formed between the base part (8) and the screw-in part (10) by the base part (8) having as connecting means a peripheral annular collar (34), which in the screwed-in state of the screw-in part (10) encloses the actuating portion (28) in a frictionally locking and/or positively locking manner.

2. Connection device according to Claim 1, characterized in that additional connecting means are formed in the region of the threads (20, 22) of the base part (8) and screw-in part (10) by the two threads (20, 22) differing from each other, at least in certain regions, with respect to at least one of their determinative thread variables.

3. Connection device for pressure lines, with a housing part (1), which has a receiving opening (2) for the insertion of a plug part and is of two parts comprising a base part (8) and a screw-in part (10), which is releasably screwed in by an externally threaded portion (20) into an internal thread (22) of the base part (8), characterized in that, to produce an increased frictionally locking and/or positively locking engagement and, as a result, an increased releasing torque, connecting means are formed in the region of the threads (20, 22) between the base part (8) and the screw-in part (10) by the two threads (20, 22) differing from each other, at least in certain regions, with respect to at least one of their determinative thread variables.

4. Connection device according to Claim 3, characterized in that the screw-in part (10) has a flange-like actuating portion (28), which adjoins the externally threaded portion (20) and is designed in particular as a hexagonal stub, the base part (8) having as additional connecting means a peripheral annular collar (34), which in the screwed-in state of the screw-in part (10) encloses the actuating portion (28) in a frictionally locking and/or positively locking manner.

5. Connection device according to one of Claims 1 to 4, characterized in that the base part (8) consists of plastic and the screw-in part (10) preferably consists of metal.

6. Connection device according to one of Claims 1 to 5, characterized in that the diameter of the annular collar (34) is chosen to match the size of the hexagonal stub of the actuating portion (28) in such a way that the corners of the hexagon press into the annular collar (34) in a positively locking manner.

7. Connection device according to one of Claims 2 to 6, characterized in that the two threads (20, 22) differ from each other in certain regions with respect to their outside diameter (D₁, D₂) and/or their included angle (α, β) and/or their effective diameter (D₃, D₄) and/or their core diameter and/or their pitch.

8. Connection device according to one of Claims 2 to 7, characterized in that the internal thread (22) of the base part (8) - preferably with the exception of the region of approximately the first two to three thread turns - has a reduced outside diameter (D₂) and/or an increased included angle (β) and/or a reduced effective diameter (D₄) in comparison with the external thread (20) of the screw-in part (10).

9. Connection device according to one of Claims 1 to 8, characterized in that in a sealing ring chamber (26), formed between the base part (8) and the screw-in part (10), there is arranged an elastic sealing ring (24) for sealing off the screw-in part (10) from the base part (8).

10. Connection device according to Claim 9, characterized in that within the sealing ring chamber (26) there is formed at least one annular elevation (40), reducing the chamber cross-section over the entire circumference, in such a way that the sealing ring is subjected zonally to increased pressing.

11. Connection device according to Claim 9 or 10, characterized in that the sealing ring chamber (26) is bounded on the one hand by an annular groove (30) of the screw-in part (10), which groove is arranged between the externally threaded portion (20) and the actuating portion (28), designed in particular as a hexagonal stub, and on the other hand by an annular portion (32) of the base part (8), which portion extends from the internal thread (22) in the direction of the opening, the annular elevation (40) preferably being arranged in the region of the annular portion (32) of the base part (8).

12. Connection device according to Claim 11, characterized in that, to form the annular elevation (40), the base part (8) has, starting from the internal thread (22), an approximately cylindrical inner face (42) which is adjoined in the direction of the opening by an annular face (44), which widens the ring chamber (26) radially outwards and merges with an inner face (46), which is preferably widened conically in the direction of the opening.

13. Connection device according to one of Claims 9 to 12, characterized in that the sealing ring (24) is designed as an O-ring.

14. Connection device according to one of Claims 9 to 12, characterized in that the sealing ring (24) has at least one peripheral annular elevation in such a way that it is subjected zonally to increased pressing via the annular elevation by bearing against the wall of the sealing ring chamber (26).

15. Connection device according to one of Claims 1 to 14, characterized in that between an end face (12) of the screw-in part (10), which face is formed on the side inserted into the base part (8), and a bore-step face (14) of the base part (8), there is formed an annular chamber (4) for a radially elastically deformable retaining ring (6), provided for arresting the plug part inserted into the receiving opening (2).

## Revendications

1. Dispositif de raccordement pour tuyauteries sous pression, comportant une partie femelle (1) présentant une ouverture de réception (2) pour l'enfichage d'une partie mâle, laquelle partie (1) étant constituée d'une partie de base (8) et d'une partie vissable (10), vissée de manière amovible par une section filetée extérieure (20) dans un filetage intérieur (22) de la partie de base (8), la partie vissable (10) présentant une section de manoeuvre (28), notamment réalisée sous forme d'un hexagone extérieur, venant se raccorder à la section à filetage extérieur (20) à la manière d'un collier, caractérisé en ce qu'entre la partie de basé (8) et la partie vissable (10) sont conformés des moyens de liaison destinés à produire une solidarisation dynamique et/ou par engagement géométrique plus élevée, et de ce fait un couple de desserrage plus élevé, par le fait que la partie de base (8), servant de moyen de liaison, présente un collier périphérique (34), lequel, à l'état vissé de la partie vissable (10), entoure la section de manoeuvre (28) en assurant une solidarisation dynamique et/ou par engagement géométrique.

2. Dispositif de raccordement selon la revendication 1, caractérisé en ce que dans la région des filetages (20, 22) de la partie de base (8) et de la partie vissable (10) sont formés des moyens d'assemblage complémentaires, en ce que les deux filetages (20, 22) se différenceient l'un de l'autre, au moins par endroits, par au moins l'un de leurs paramètres caractéristiques.

3. Dispositif de raccordement pour tuyauteries sous pression, comportant une partie femelle (1) munie d'une ouverture réceptacle (2) pour l'enfichage d'une partie mâle, la partie femelle (1) étant constituée en deux pièces, à savoir une partie de base (8) et une partie vissable (10), vissée de manière amovible au moyen d'une section filetée extérieure (20) dans un filetage intérieur (22) de la partie de base (8), caractérisé en ce que dans la région des filetages (20, 22), entre la partie de base (8) et la partie vissable (10), sont formés des moyens de liaison afin de produire une solidarisation dynamique et/ou par engagement mécanique d'un niveau plus élevé, et donc un couple de desserrage d'un niveau plus élevé, du fait que les deux filetages (20, 22) se différencient l'un de l'autre, au moins par endroits, par au moins l'un de leurs paramètres caractéristiques.

4. Dispositif de raccordement selon la revendication 3, caractérisé en ce que la partie vissable (10) présente une section de manoeuvre (28) en forme de bride, réalisée notamment sous la forme d'un hexagone extérieur, qui se raccorde à la section filetée extérieure (20), la partie de base (8) présentant un collier périphérique (34) servant de moyen de liaison complémentaire qui, à l'état vissé de la partie vissable (10), entoure la section de manoeuvre (28) en réalisant une solidarisation dynamique et/ou par engagement géométrique.

5. Dispositif de raccordement selon l'une des revendications 1 à 4, caractérisé en ce que la partie de base (8) est constituée en matière plastique, et que la partie vissable (10) est constituée de préférence en métal.

6. Dispositif de raccordement selon l'une des revendications 1 à 5, caractérisé en ce que le diamètre du collier annulaire (34), pour s'adapter aux dimensions de l'hexagone extérieur de la section de manoeuvre (28) est sélectionnée de telle sorte que les angles de l'hexagone viennent s'engager sous pression et de par leur forme à l'intérieur du collier annulaire (34).

7. Dispositif de raccordement selon l'une des revendications 2 à 6, caractérisé en ce que les deux filetages (20, 22) se différencient l'un de l'autre par endroits par leur diamètre extérieur (D₁, D₂) et/ou leur angle de flanc (α, β) et/ou leur diamètre de flanc (D₃, D₄) et/ou les diamètres de leurs âmes et/ou leurs pas.

8. Dispositif de raccordement selon l'une des revendications 2 à 7, caractérisé en ce que le filetage intérieur (22) de la partie de base (8) - de préférence à l'exception de la région où se trouvent par exemple les deux à trois premiers filets - présente par rapport au filetage extérieur (20) de la partie vissable (10), un diamètre extérieur (D₂) plus faible, et/ou un angle de flanc (β) plus grand, et/ou un diamètre de flanc (D₄) plus faible.

9. Dispositif de raccordement selon l'une des revendications 1 à 8, caractérisé en ce que dans une chambre (26) formée entre la partie de base (8) et la partie vissable (10), est disposée une bague d'étanchéité élastique (24) afin de réaliser l'étanchéité entre la partie vissable (10) et la partie de base (8).

10. Dispositif de raccordement selon la revendication 9, caractérisé en ce qu'à l'intérieur de la chambre (26) est conformé au moins un bossage circulaire (40) qui réduit la section transversale de la chambre sur tout son pourtour, de telle sorte que la bague d'étanchéité est soumise par endroits à une compression plus élevée.

11. Dispositif de raccordement selon la revendication 9 ou 10, caractérisé en ce que la chambre (26) est limitée d'un côté par une gorge circulaire (30) de la partie vissable (10) disposée entre la section filetée extérieure (20) et la section de manoeuvre (28) réalisée en particulier sous la forme d'un hexagone extérieur, et d'autre part par une section circulaire (32) de la partie de base (8) qui s'étend en direction de l'ouverture à partir du filetage intérieur (22), le bossage circulaire (40) étant disposé de préférence dans la région de la section circulaire (32) de la partie de base (8).

12. Dispositif de raccordement selon la revendication 11, caractérisé en ce que la partie de base (8) présente, pour former le bossage circulaire (40), une surface intérieure (42) sensiblement cylindrique à partir du filetage intérieur (22), surface intérieure (42) à laquelle fait suite dans la direction de l'ouverture une surface circulaire (44) qui élargit la chambre (26) radialement vers l'extérieur, cette face (44) se transformant ensuite en une face intérieure (46) s'élargissant de préférence à la manière d'un cône dans la direction de l'ouverture.

13. Dispositif de raccordement selon l'une des revendications 9 à 12, caractérisé en ce que la bague d'étanchéité (24) est réalisée sous la forme d'un joint torique.

14. Dispositif de raccordement selon l'une des revendications 9 à 12, caractérisé en ce que la bague d'étanchéité (24) présente au moins un bossage circulaire périphérique, de telle manière que par son application sur la paroi de la chambre (26), ladite bague d'étanchéité (24) est soumise par endroits à une force de compression plus élevée du fait du bossage annulaire.

15. Dispositif de raccordement selon l'une des revendications 1 à 14, caractérisé en ce qu'entre une face frontale (12) de la partie vissable (10) formée sur le côté inséré dans la partie de base (8), et une face dégradée (14) d'un perçage pratiqué dans la partie de base (8), est formée une chambre circulaire (4) pour une bague de retenue (6), élastiquement déformable dans le sens radial, prévue pour bloquer la partie mâle enfichée dans l'ouverture réceptacle (2).
